(19) Europäisches Patentamt
European Patent Office
Office européen des brevets

(11) **EP 4 553 473 A1**

(12) **EUROPEAN PATENT APPLICATION**

(43) Date of publication:
**14.05.2025 Bulletin 2025/20**

(21) Application number: **23383156.9**

(22) Date of filing: **13.11.2023**

(51) International Patent Classification (IPC):
**G01M 5/00** (2006.01)    **G01M 13/00** (2019.01)
**G01M 99/00** (2011.01)    **A43D 999/00** (2006.01)
**G01M 7/00** (2006.01)

(52) Cooperative Patent Classification (CPC):
**G01M 5/0033; A43D 999/00; G01M 5/0041;
G01M 7/00; G01M 13/00; G01M 99/007**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Fundación Tecnalia Research &
Innovation**
**20009 Donostia-San Sebastian, Guipuzcoa (ES)**

(72) Inventors:
• **HERNANDO TORRES, Eduardo Javier**
  **E-20009 Donostia-San Sebastián (ES)**

• **PÉREZ ALFARO, Irene**
  **E-20009 Donostia-San Sebastián (ES)**
• **GIL HERNÁNDEZ, Daniel**
  **E-20009 Donostia-San Sebastián (ES)**
• **SELVA CASTAÑEDA, Antonio Rafael**
  **E-20009 Donostia-San Sebastián (ES)**
• **LÓPEZ DE IPIÑA PEÑA, Jesús María**
  **E-20009 Donostia-San Sebastián (ES)**

(74) Representative: **Balder IP Law, S.L.**
**Paseo de la Castellana 93**
**5ª planta**
**28046 Madrid (ES)**

(54) **METHOD FOR ESTIMATING THE USEFUL LIFE OF AN ELASTOMERIC MEMBRANE USED IN MEMBRANE FORMING PROCESSES**

(57)    The invention relates to a method for monitoring the health of elastomeric membranes used in membrane forming processes, in order to predict the remaining useful life of the membrane. The method comprises: attaching at least one PVDF flexible film sensor to an elastomeric membrane used in the forming process by means of an adhesive, and subjecting said membrane to multiple work cycles, in which the membrane is subjected to pressure and to at least one temperature. By applying the method, signals related to a physical quantity are obtained through the PVDF sensor during the work cycles and said measurements are processed to estimate an indicator of the health condition of the membrane.

**FIG. 1**

EP 4 553 473 A1

**Description**

**OBJECT OF THE INVENTION**

The invention relates to a methodology for monitoring the ageing of elastomeric membranes used in material forming processes, in order to predict the useful life thereof.

Elastomeric membranes are used in different industries, including the laminated glass, aerospace, food, wood, automotive and plastics industries, among others. In these industries, membranes are used in the vulcanisation, lamination, forming and attachment of various materials. An exemplary application is also the footwear industry, where a membrane is used to shape the heel of a shoe.

This patent has been supported by the RECLAIM (RE-manufaCturing and Refurbishment LArge Industrial equipMent) European project. This project has received funding from the European Union's Horizon 2020 Research and Innovation Programme, under grant agreement no. 865884.

**STATE OF THE ART**

Elastomeric membranes have the ability to provide a hermetic seal and be resistant to different temperatures and pressure, playing an essential role in a wide variety of industrial applications.

Membrane rupture during the forming process entails a number of significant drawbacks, including: loss of tightness, which can affect product quality and generate additional costs associated with membrane repair or replacement; unplanned downtime in production or potential impacts on the health and safety of workers in certain cases. For all these reasons, preventing membrane rupture and properly maintaining said membrane are essential to guarantee efficiency and quality in industrial membrane forming processes.

In the particular case of elastomeric membranes, despite their elasticity, their rupture can be due to various factors, such as wear and fatigue over time, the application of excessive pressure and/or temperature, manufacturing defects, exposure to harsh chemicals, or lack of maintenance. In addition, the membranes can also show signs of mechanical damage due to the repeated inflation and deflation cycles, the working temperature and the extreme operating conditions, which can contribute to the rupture thereof.

Specifically in the footwear industry, elastomeric membranes are used to form soles made of rubber and other polymers, guaranteeing manufacturing quality and accuracy.

In the production of footwear heels, a heeling machine is used, where the geometry of the shaped heel is obtained by applying a combined pressure and temperature cycle.

This manufacturing process involves a large number of inflation and deflation cycles, as well as the application of temperature with the shoe tree on the forming membrane. All of this causes rapid deterioration of the membrane, with the appearance of cracks, which can generate both deviations in the quality of the manufactured footwear and interruptions in the production chain, which can entail both a significant increase in production costs as well as non-conformance with respect to customer specifications.

Due to the operating conditions to which the membrane is subjected inside the fixing mould (high pressures and temperatures) and the need for a high degree of tightness between the membrane and the mould itself so that the highpressure hydraulic circuit can operate correctly, the instrumentation of the membrane cannot be undertaken with commercial sensors, since:

- The existing strain sensors on the market have a very high cost and, in some cases, the constructive character thereof entails the difficulty of housing said sensors between the membrane and the mould.
- Measuring strain with traditional methods that could fall within the required dimensional ranges does not provide sufficient data acquisition speed to monitor the dynamic behaviour of the inflation-deflation process.

**DESCRIPTION OF THE INVENTION**

The present invention provides a solution to the aforementioned problem, and for this it is based on the use of flexible piezoelectric sensors of poly-1,1-difluoroethene (synonym of polyvinylidene fluoride, hereinafter PVDF), for the detection of failures in elastomeric membranes, taking advantage of the ability of these sensors to adapt to a complex volumetric surface, as well as their high sensitivity to dynamic changes.

More specifically, one aspect of the invention relates to a method for estimating the useful life of an elastomeric membrane suitable for forming various materials. The method comprises attaching at least one PVDF sensor to an elastomeric membrane by means of an adhesive, and subjecting said membrane to multiple work cycles in a thermoforming machine.

The adhesive must be resistant to the maximum operating temperature of the forming machine. Moreover, the sensor, in the form of a flexible film, must be able to attach to the membrane adapting to its shape, in order to obtain data in any area of the membrane, particularly in those areas that are subjected to greater strain stresses.

Subsequently, membrane elasticity measurements are obtained using the PVDF sensor during the work cycles, and said measurements are processed to estimate the progressive loss of elasticity of the membrane, i.e., to estimate the rigidity thereof.

By ageing the membrane through multiple stress cycles in which pressure and at least one working temperature are applied, measurements of the strains in the membrane are taken using a reference sensor (e.g., a strain gauge) and a PVDF flexible film sensor attached to the membrane.

To characterise the membrane, a comparison is made between the measurements obtained with the PVDF sensor and the values obtained with the reference sensor, simulating the straining process at laboratory level under conditions similar to actual ones.

One application of the described method consists of monitoring the health condition of membranes for the industrial forming of shoe heels, the objective of which is to optimise the predictive maintenance thereof in order to schedule technical stops to prevent productive and non-quality costs derived from its rupture.

The PVDF sensors are adhered to the surface of the membrane at several different points, previously selected as critical strain points of the membrane in the generation of defects. The flexible PVDF sensors are fixed to the outer surface of the membrane by means of adhesive, said membrane which will be mechanically assembled in the heeling machine.

## DESCRIPTION OF THE FIGURES

As a complement to the description, and for the purpose of making the invention more readily understandable, this description is accompanied by a set of figures constituting an integral part of the same and illustrating embodiments of the invention, wherein said figures should not be interpreted as limiting the scope of the invention, but as examples of how the invention can be implemented. The referenced figures are the following:

Figure 1 shows a block diagram of the digital system for monitoring membranes.

Figure 2 shows a block diagram of the method produced by the invention to estimate the useful life of elastomeric membranes.

Figure 3 shows perspective views of a typical membrane for forming footwear heels in a heeling machine.

Figure 4 shows a graph with the results obtained from the measurements made with the strain gauge and the PVDF sensor, as part of the validation process of the latter sensor.

Figure 5 shows a graph with the correlation analysis between the measurements of the strain gauge and the PVDF sensor.

Figure 6 shows a graph with the waveforms obtained in the footwear heel forming process, using a heeling machine provided with a membrane that integrates a PVDF sensor.

Figure 7 shows graphs with the points selected to establish the metrics on the membrane.

Figure 8 shows several graphs with the signals of the forming process, using different metrics: metric 1 (graph A), metric 2 (graph B), and metric 3 (graph C).

Figure 9 shows graphs with the signals of the forming process, using different metrics: metric 4 (graph A) and metric 5 (graph B).

Figure 10 shows a graph with data adjustment to an exponential model. The graph indicates the different identified work areas with different shaded regions.

## PREFERRED EMBODIMENT OF THE INVENTION

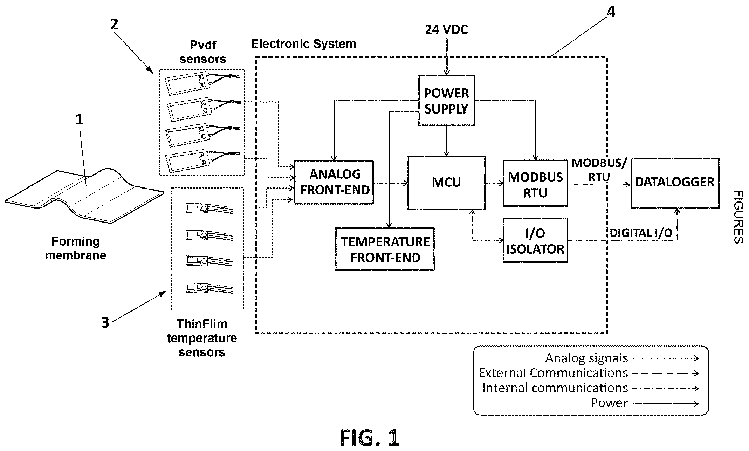

**Figure 1** shows a block diagram of a digital system for monitoring the useful life of a forming membrane (1), which implements the method of the invention. The digital system is made up of a group of flexible PVDF piezoelectric sensors (2), a group of temperature sensors (3) that are fixed to the membrane (1) and electronic equipment (4) for capturing and processing signals.

The electronic equipment (4) is made up of:

- An analog block which is responsible for the excitation, conditioning, filtering and digitisation of the signals coming from the flexible PVDF sensors (2). This step is capable of measuring at high speed and simultaneously in all sensors, in order to perfectly characterise the brief inflation and deflation period of each cycle;
- A high performance, low power microcontroller (MCU). This element will be responsible for capturing the data coming from the sensors, both flexible pressure-strain and temperature, as well as applying the algorithms designed to process said information and provide the required membrane health indicators. Moreover, it will also be responsible for managing communication by means of industrial protocols with the industrial network to which it is connected, and for managing isolated inputs and outputs (should they be provided);

- A <u>Modbus-RTU block</u> including the circuitry required to isolate and adapt the voltage and logic levels of the physical layer, from the levels of the microcontroller to those of the Modbus-RTU industrial protocol;
- <u>Input/Output isolators (I/O Isolator),</u> made up of the electronics required to adapt and isolate the digital inputs and outputs of the machine.
- A Power <u>Supply block</u> made up of the electronic steps required to provide isolation with respect to the power supply coming from the 24 VDC industrial network and adapt the voltage levels that are required to power the electronic system safely.

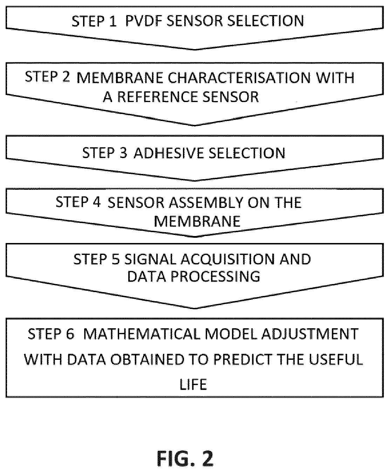

For this reason, an estimation method that is based on measuring the elasticity of the membrane with a PVDF sensor is proposed. The method consists of several steps the sequence of which is shown in **Figure 2:** Step 1. Selection of a suitable PVDF sensor; Step 2. Characterisation of the membrane with a reference sensor; Step 3. Selection of a suitable adhesive; Step 4. Assembly of the sensor on the membrane; Step 5. Acquisition of sensor signals and processing of the obtained data and, finally, Step 6. Adjustment of a mathematical model with the obtained data to predict the useful life of the membrane.

In the event that the membrane works at a single temperature, adjusting one mathematical model is sufficient.

To characterise the material, the membrane is installed in a suitable tooling, and a PVDF sensor and a strain gauge are fixed to the membrane. Next, the membrane is aged by subjecting the same to multiple stress cycles in which pressure and at least one temperature are applied. The flexible PVDF sensor coupled to the membrane and the strain gauge send signals equivalent to the microstrains suffered by the membrane during the stress cycles.

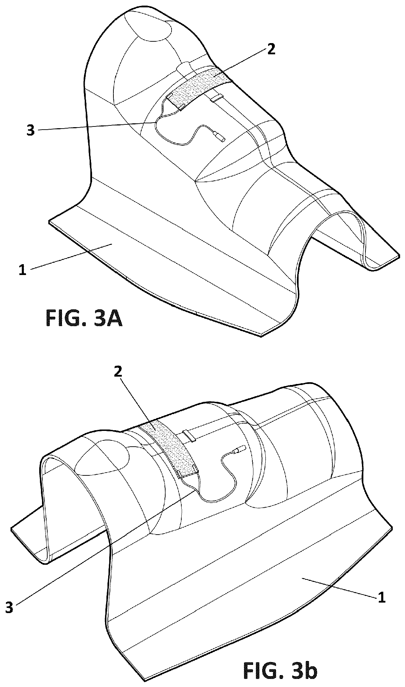

In the exemplary application of the invention, the method is used to estimate the remaining useful life of a typical membrane such as that shown in **Figure 3,** used for forming footwear heels in a heeling machine. The membrane (1) integrates a PVDF sensor (2) with the corresponding wiring (3), which is installed in a critical area of the membrane exposed to greater wear, so that the PVDF sensor (2) due to its flexible nature adapts to the curvature of the membrane.

The PVDF sensor (2) is attached to the outer surface of the membrane (1) by means of an adhesive suitable for this functionality, which withstands the working temperatures of the membrane and has a high elongation capacity.

Once the PVDF sensor (2) is correctly fixed to the membrane (1), the membrane is installed in a hot (heeling) forming machine, and measurements are taken with the PVDF sensor (2).

To implement the described method for estimating the useful life of the membrane, the causes that may cause its rupture are first identified. In this case, membrane rupture occurs due to two factors: first, exposure to high temperatures that weaken the material due to loss of elasticity, and second, repeated pressure cycles that cause rupture stresses.

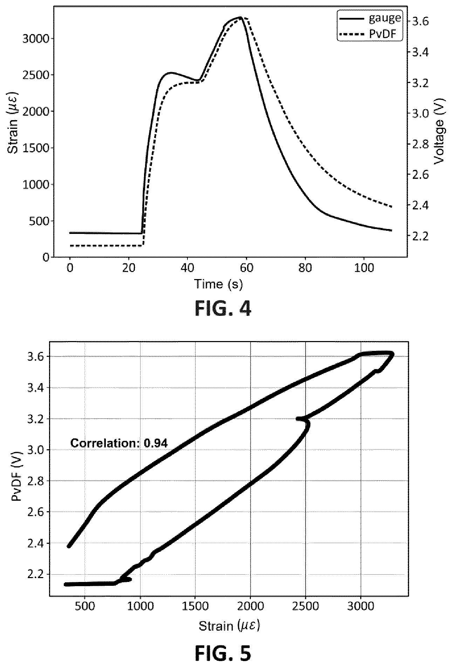

The graphs of **Figure 4** are obtained with the signals captured by the PVDF sensor and the reference sensor (strain gauge), and a study is carried out to determine the degree of relationship between the measurements provided by both sensors, in this case obtaining the correlation between both signals (Pearson's R correlation coefficient) that is *cor* = *0.94,* as shown in **Figure 5.** As the correlation that exists between both measurements is high, a polynomial regression is carried out to obtain an equation that determines the strains from the signal of the PVDF sensor in volts (V). The polynomial obtained to measure the strains is shown in the following equation:

$$D = -1499.07x^3 + 13637.30x^2 - 38509.31x + 34991.78 \qquad (1)$$

where: D indicates strains, and X the voltage values in volts provided by the PVDF sensor.

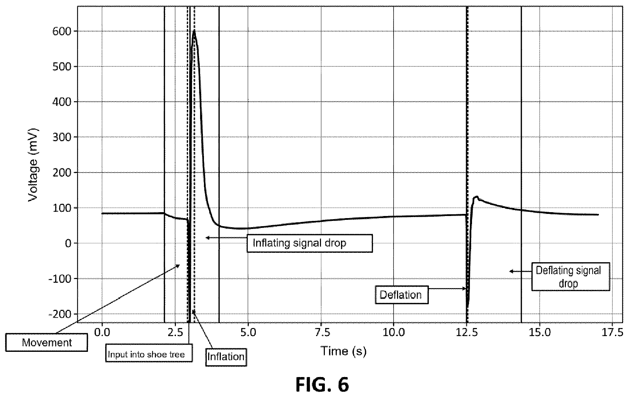

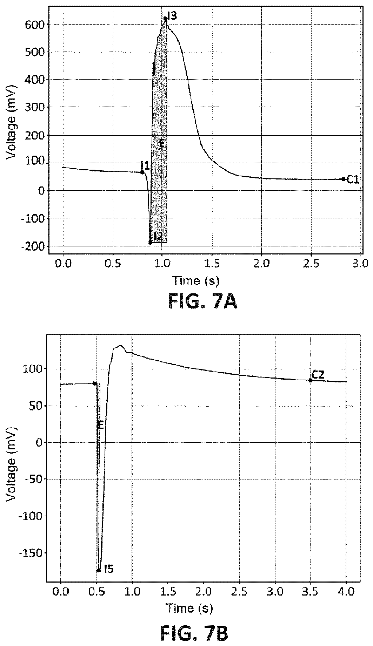

As can be seen in **Figure 6,** each segment of the obtained signal coincides with the different phases that occur in time during the forming of the footwear. From this signal, 5 metrics are established, taking maximum and minimum points, as well as the beginning and end of each process as a reference, as shown in **Figures 7A and 7B.**

<u>Metric 1 [mv] = Amplitude of the shoe tree input.</u> It provides information about the strain and loss of elasticity at the most critical point of the membrane.

$$M_1 = i_2(mV) - i_1(mV) \qquad (2)$$

<u>Metric 2 [mv] = Amplitude of the inflation signal.</u> It provides information about the loss of elasticity and strain with respect to the initial state of the membrane.

$$M_2 = i_3(mV) - i_2(mV) \qquad (3)$$

<u>Metric 3 [mV*S] = Energy transferred in the inflation</u> process. It provides information about the energy transferred in the inflation process and, consequently, the loss of elasticity, tightness and strain.

$$M_3 = \int_{i_2(t)}^{i_3(t)} i(t)dt \qquad (4)$$

<u>Metric 4 [mv] = Amplitude of the deflation signal.</u> It provides information about the strain with respect to the initial state of forming pressure.

$$M_4 = i_5(mV) - i_4(mV) \qquad (5)$$

<u>Metric 5 [mV*S] = Loss of energy transferred in the deflation process.</u> It provides information about the loss of energy transferred in the deflation process and, consequently, the total loss of tightness and elasticity during the forming cycle.

$$M_5 = \int_{i_4(t)}^{i_5(t)} i(t)dt \qquad (6)$$

To analyse the metrics, the forming process is divided into two parts: the first part characterises the input process into the shoe tree **(Figure 7A)** and the second part characterises the output of the footwear from the shoe tree **(Figure 7B).** Taking this into account, the signals are acquired during an entire work day, obtaining the mean and standard deviation (Std) for each metric, as shown in Table 1.

Table 1. Mean and standard deviation (Std) of the forming process metrics

|      | Metric 1 (mV) | Metric 2 (mV) | Metric 3 (mV*S) |
|------|---------------|---------------|-----------------|
| Mean | -230.46000    | 813.48100     | 77.74240        |
| Std  | 24.9024       | 18.0304       | 0.25051         |

For the output process of the footwear from the heeling machine, the results shown in Table 2 were obtained.

Table 2. Mean and standard deviation (Std) of the metrics of the output process of the footwear from the shoe tree.

|      | Metric 4 (mV) | Metric 5 (mV*S) |
|------|---------------|-----------------|
| Mean | -258.86500    | -3.86367        |
| Std  | 3.71272       | 1.80122         |

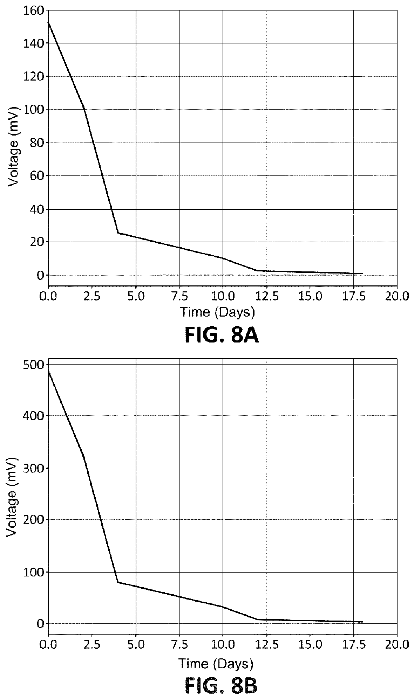

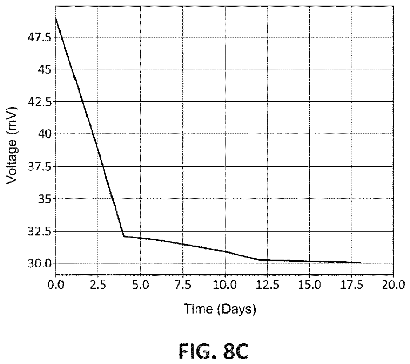

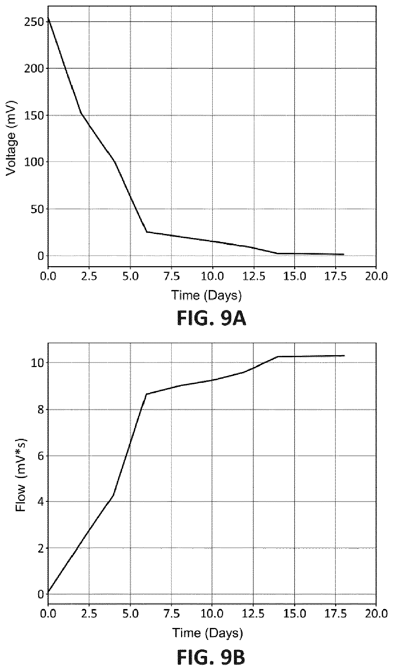

To study the evolution of the membrane, the signals provided by the PVDF sensor and the temperature at which the machine operates are collected every 2 days for a 20-day period. The previously described method is applied to these signals to obtain the mean and standard deviation in each of the metrics used, and then to graph the mean values against time for the inflation process in **Figures 8A, 8B** and **8C** and for the deflation process in **Figures 9A and 9B.**

**Figures 8A, 8B** and **8C** show the manner in which the metrics 1 **(Fig. 8A)**, 2 **(Fig. 8B)** and 3 **(Fig. 8C),** drop as a function of time, which suggests that the membrane is less strained, thus increasing its rigidity. Furthermore, it is observed that the rate of increase in rigidity is higher in the first 4 days, while the curves have a gentler slope in the subsequent days.

**Figure 9A** (Metric 4) shows that the difference in potential caused by the PVDF is smaller as days go by, suggesting that the membrane is less and less strained, while **Figure 9B** (metric 5) shows that the flow of potential caused by the strain of the membrane increases as a function of time, a fact that does not contradict the assumption that the membrane becomes more rigid; since it is a deflation process, what may be occurring is that the membrane takes longer to recover its original shape and continues to generate loads for a longer time.

To process the data obtained and analyse the signals obtained, Metric 2 has been selected as an example, although any of the other metrics can also be chosen, since they are all strongly correlated. After data collection is carried out, Metric 2 is graphed as a function of time and a mathematical model that is capable of predicting when the membrane reaches its maximum rigidity and needs to be changed is adjusted. The chosen model is exponential and adjusting the curve with the collected data obtains the following mathematical model:

$$M_2(t) = 827.1490e^{-0.2831t}. \qquad (7)$$

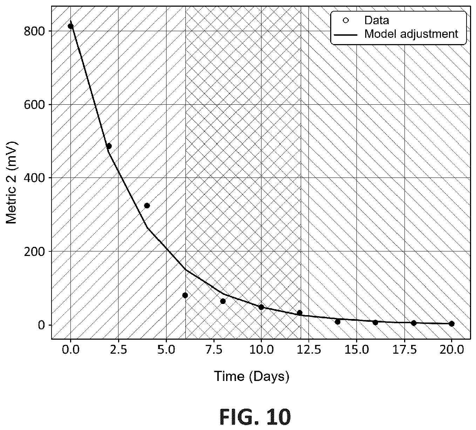

Adjusting the model of equation 7 obtains the graph of **Figure 10,** in which three cases or work areas are distinguished: 1) Membrane in optimal conditions (shaded region with left slanting lines), 2) Aged membrane, but without risk of rupture (criss-cross shaded region) and 3) Very rigid membrane and close to rupture (shaded region with right slanting lines).

The adjustment of Metric 2 data to an exponential curve is evaluated using statistical criteria, obtaining the parameters shown below, where $R^2$ is the coefficient of determination, MAE is the mean absolute error, MSE is the mean square error and RMSE is the root mean square error.

Table 3: Metric 2 Adjustment

| $R^2$ | 0.9866 |
|-------|--------|
| MSE | 846.9481 |
| MAE | 17.7984 |
| RMSE | 29.1023 |

From the values obtained above, it can be inferred that the model adjusted to Metric 2 data is good and is capable of predicting the health condition of the membrane over time. In this case, the membrane worked throughout the test period at a constant temperature of approximately $121^0C$ and it was only required to have the signals from the PVDF sensor, to estimate the working area in **Figure 10** where the membrane was located.

**Claims**

1. A method for estimating the useful life of an elastomeric membrane used in membrane forming processes, wherein the method comprises: attaching at least one PVDF sensor to an elastomeric membrane by means of an adhesive; subjecting said membrane to multiple work cycles in a forming machine, in which the membrane is subjected to pressure and to at least one temperature; obtaining a signal from the PVDF flexible film sensor during work cycles; and processing said signals to estimate the health of the membrane.

2. The method according to claim 1, wherein prior to taking measurements using the PVDF sensor, an ageing model of an elastomeric membrane of the same type is obtained, subjecting the membrane to multiple stress cycles in which pressure and the at least one temperature is applied, and measurements are taken using a reference sensor attached to the membrane and a PVDF flexible film sensor.

3. The method according to claim 2, wherein the reference sensor depends on the physical quantity to be analysed.

4. The method according to claims 1 and 2, wherein, based on the measurements obtained by the PVDF flexible film sensor, the condition of the membrane is compared with the ageing model using a mathematical model, and the remaining useful life of that membrane is deduced.

5. The method according to claim 4, wherein the signal processing and deduction of the useful life of the membrane is carried out based on one of the following metrics:

   - Metric 1 [mv] = Amplitude of the shoe tree input, which provides information about the strain and loss of elasticity at the most critical point of the membrane;
   - Metric 2 [mv] = Amplitude of the inflation signal, which provides information about the loss of elasticity and strain with respect to the initial state of the membrane;
   - Metric 3 [mV*S] = Energy transferred in the inflation process, which provides information about the energy transferred in the inflation process and consequently the loss of elasticity, tightness and strain;
   - Metric 4 [mv] = Amplitude of the deflation signal, which provides information about the strain with respect to the initial state of forming pressure;
   - Metric 5 [mV*S] = Loss of energy transferred in the deflation process, which provides information about the loss of energy transferred in the deflation process and the total loss of tightness and elasticity during the forming cycle.

6. The method according to any of the preceding claims, wherein the membrane is formed by a layer of elastomeric material and a layer of leather superimposed and attached together, and wherein the membrane is configured to form footwear heels in a heeling machine.

FIGURES

FIG. 1

STEP 1  PVDF SENSOR SELECTION

STEP 2  MEMBRANE CHARACTERISATION WITH
A REFERENCE SENSOR

STEP 3  ADHESIVE SELECTION

STEP 4  SENSOR ASSEMBLY ON THE
MEMBRANE

STEP 5  SIGNAL ACQUISITION AND
DATA PROCESSING

STEP 6  MATHEMATICAL MODEL ADJUSTMENT
WITH DATA OBTAINED TO PREDICT THE USEFUL
LIFE

**FIG. 2**

FIG. 3A

FIG. 3b

**FIG. 4**

**FIG. 5**

FIG. 6

FIG. 7A

FIG. 7B

**FIG. 8A**

**FIG. 8B**

FIG. 8C

**FIG. 9A**

**FIG. 9B**

FIG. 10

Europäisches
Patentamt

European
Patent Office

Office européen
des brevets

# EUROPEAN SEARCH REPORT

Application Number

EP 23 38 3156

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HERNANDO EDUARDO ET AL: "First results on polyvinylidene fluoride film-based sensors for fault detection in leather and rubber membranes used in footwear manufacturing", 2023 3RD INTERNATIONAL CONFERENCE ON ELECTRICAL, COMPUTER, COMMUNICATIONS AND MECHATRONICS ENGINEERING (ICECCME), IEEE, 19 July 2023 (2023-07-19), pages 1-5, XP034428512, DOI: 10.1109/ICECCME57830.2023.10252273 [retrieved on 2023-09-22] * the whole document * | 1-6 | INV. G01M5/00 G01M13/00 G01M99/00 A43D999/00 G01M7/00 |
| A | US 2008/202606 A1 (O'HARA DENNIS E [US] ET AL) 28 August 2008 (2008-08-28) * paragraph [0002]; claims 1-5,13-21; figures 1,3,4,5 * * paragraph [0007] - paragraph [0008] * * paragraph [0017] - paragraph [0044] * | 1-6 | |

TECHNICAL FIELDS
SEARCHED (IPC)

G01M
B29D
A43D
F16K

The present search report has been drawn up for all claims

| Place of search | Date of completion of the search | Examiner |
|---|---|---|
| The Hague | 3 April 2024 | Foster, Keir |

## ANNEX TO THE EUROPEAN SEARCH REPORT
## ON EUROPEAN PATENT APPLICATION NO.

EP 23 38 3156

This annex lists the patent family members relating to the patent documents cited in the above-mentioned European search report.
The members are as contained in the European Patent Office EDP file on
The European Patent Office is in no way liable for these particulars which are merely given for the purpose of information.

03-04-2024

| Patent document cited in search report | Publication date | Patent family member(s) | | Publication date |
|---|---|---|---|---|
| US 2008202606 A1 | 28-08-2008 | AR | 065492 A1 | 10-06-2009 |
| | | AT | E523721 T1 | 15-09-2011 |
| | | CA | 2679404 A1 | 04-09-2008 |
| | | CN | 101622482 A | 06-01-2010 |
| | | EP | 2118539 A1 | 18-11-2009 |
| | | JP | 5394262 B2 | 22-01-2014 |
| | | JP | 2010519488 A | 03-06-2010 |
| | | US | 2008202606 A1 | 28-08-2008 |
| | | WO | 2008106264 A1 | 04-09-2008 |

EPO FORM P0459

For more details about this annex : see Official Journal of the European Patent Office, No. 12/82